# EUROPÄISCHE PATENTSCHRIFT

(11) **EP 3 347 593 B1**
(45) Veröffentlichungstag und Bekanntmachung des Hinweises auf die Patenterteilung: **17.11.2021**
(21) Anmeldenummer: 16760751.4
(22) Anmeldetag: 07.09.2016
(51) Int. Cl.: F03D 7/04, F03D 7/02

(54) **VERFAHREN ZUM BETREIBEN EINES WINDPARKS**
METHOD FOR OPERATING A WIND FARM
PROCÉDÉ DE FONCTIONNEMENT D'UN PARC ÉOLIEN

(30) Priorität: 07.09.2015 DE 102015114958
(43) Veröffentlichungstag der Anmeldung: 18.07.2018
(73) Patentinhaber: Wobben Properties GmbH, 26607 Aurich (DE)
(72) Erfinder: DE BOER, Wolfgang, 26802 Moormerland (DE); MÜLLER, Tim, 53859 Niederkassel (DE); HARMS, Harro, 26639 Wiesmoor (DE)
(74) Vertreter: Eisenführ Speiser
(86) Internationale Anmeldenummer: PCT/EP2016/071028
(87) Internationale Veröffentlichungsnummer: WO 2017/042191

(56) Entgegenhaltungen:
- EP-A1- 2 604 853
- EP-A2- 2 063 108
- WO-A1-2015/039665

## Beschreibung

Windparks sind bekannt und in ihnen sind mehrere, wenigstens zwei, meist aber deutlich mehr Windenergieanlagen zusammengefasst und die Windenergieanlagen speisen ihren Strom dabei üblicherweise über einen gemeinsamen Netzanschlusspunkt des Parks in das elektrische Versorgungsnetz ein. Besonders in solchen Windparks kommt es vor, dass wenigstens zwei Windenergieanlagen so dicht beieinander stehen, dass die eine Windenergieanlage die andere über den Wind beeinflusst. Besonders kann es vorkommen, dass bei einer bestimmten Windrichtung eine Windenergieanlage hinter einer anderen steht, also in der Leeseite der anderen steht. Eine solche hintere, in Lee stehende Windenergieanlage kann dadurch möglicherweise schwächeren Wind und/oder turbulenteren Wind erhalten. Das kann besonders dazu führen, dass diese hintere Windenergieanlage nur noch weniger Leistung erzeugen kann. Dieses Phänomen wird auch als Wake-Effekt beschrieben.

Grundsätzlich ist dieses Problem bekannt und es wäre meist unverhältnismäßig, die Windenergieanlagen so weit auseinander zu stellen, dass solche Effekte gar nicht auftreten, weil dadurch sehr viel Platz verschenkt werden würde, auf dem Windenergieanlagen aufgestellt werden könnten.

Problematisch kann hierbei sein, dass die exemplarisch genannten beiden Windenergieanlagen von unterschiedlichen Betreibern betrieben werden. Es ist dann nicht nur von Bedeutung, wie viel Leistung der Windpark insgesamt ins Netz einspeisen kann, sondern welche Anlage konkret aufgrund eines solchen Wake-Effektes betroffen ist. Hier kommt besonders in Betracht, dass eine von beiden Windenergieanlagen später aufgestellt wurde und somit die andere einen gewissen Bestandschutz genießt. Wenn diese ältere Windenergieanlage nun nach Neubau der anderen neueren Windenergieanlage in Lee steht und weniger Leistung erzeugt, ist dies für diesen Betreiber der älteren Windenergieanlage entsprechend unerwünscht.

Es kommen aber auch andere Fälle in Betracht, bei denen es unerwünscht ist, dass die hintere Windenergieanlage, also die Windenergieanlage in Lee durch die vordere beeinflusst wird. Besonders können durch die vordere Windenergieanlage auch Turbulenzen auftreten, die nicht nur die Leistung der hinteren Windenergieanlage in Lee reduzieren, sondern auch zu einer unerwünschten mechanischen Zusatzbelastung führen können. So kann es beispielsweise sein, dass die besagte Windenergieanlage in Lee weniger Leistung erzeugt als aufgrund der vorherrschenden Windgeschwindigkeit möglich wäre, gleichwohl einer hohen Windbelastung durch die genannten Verwirbelungen ausgesetzt ist. In diesem Fall stünde zumindest die Belastung in einem ungünstigen Verhältnis zur Leistungserzeugung.

Um diese Probleme zu lösen, ist bereits vorgeschlagen worden, eine solche in Luv stehende Windenergieanlage abzuschalten, um die zu ihr hintere Windenergieanlage in Lee nicht negativ zu beeinflussen, insbesondere nicht den Wirbeln der Windgeschwindigkeit auszusetzen, die durch diese Luvanlage ansonsten entstehen würden.

Obwohl eine solche Situation selten auftritt, ist ein solches Abschalten naturgemäß für den Betreiber der Anlage, die abgeschaltet werden soll, unerwünscht.

In der WO 2015/039665 A1 ist ein Verfahren zum Betrieb einer Windenergieanlage in einem Windpark offenbart. Bei dem Verfahren werden Verluste durch einen auftretenden Wake-Effekt berücksichtigt. Der Wake-Effekt tritt auf, wenn eine Windenergieanlage eine Azimutposition in bestimmten Azimutwinkelbereichen einnimmt. In diesem Fall werden für die betreffenden Windenergieanlagen modifizierte Kennlinien verwendet, um eine höhere Energieausbeute für den Windpark zu erzielen.

Die EP 2 063 108 A2 offenbart ebenfalls ein Verfahren, um den Wake-Effekt in einem Windpark zu berücksichtigen, indem die Leistung luvseitiger Windenergieanlagen reduziert wird, wenn dadurch der Energieertrag des Windparks erhöht werden kann. Eine luvseitige Windenergieanlage wird jedoch nicht abgeregelt, indem auf eine andere Betriebsart umgeschaltet wird, wenn die luvseitige Windenergieanlage zu keinem Wake-Verlust bei einer leeseitigen Windenergieanlage führt. Das ist zum Beispiel bei sehr hohen oder sehr niedrigen Windgeschwindigkeiten der Fall.

Das Deutsche Patent- und Markenamt hat in der Prioritätsanmeldung zu vorliegender Anmeldung folgenden Stand der Technik recherchiert: GB 2 481 461 A, US 2011/0208483 A1, US 2012/0133138 A1, US 2013/0156577 A1, EP 2 063 108 A2 und WO 2015/039665 A1.

Der vorliegenden Erfindung liegt somit die Aufgabe zugrunde, zumindest eines der vorstehend erläuterten Nachteile zu adressieren. Insbesondere soll eine Lösung vorgeschlagen werden, die den genannten Wake-Effekt berücksichtigt aber dennoch ein Abschalten der jeweils vorgelagerten Windenergieanlage in Luv vermeiden soll. Zumindest soll im Vergleich zu bisher Bekanntem eine Alternative vorgeschlagen werden.

Erfindungsgemäß wird ein Verfahren gemäß Anspruch 1 vorgeschlagen, demnach jede Windenergieanlage jeweils eine Gondel mit einem aerodynamischen Rotor mit einem oder mehreren Rotorblätter sowie einem Generator aufweist, jede dieser Windenergieanlagen in ihrer Azimutstellung veränderbar ist, wenigstens zwei der Windenergieanlagen so nah zusammenstehen, dass sie sich je nach Windrichtung über den Wind beeinflussen können, und wenigstens eine erste der Windenergieanlagen in Abhängigkeit ihrer Azimutstellung abgeregelt wird, um den Wind für eine in Windrichtung hinter der ersten angeordneten weitere Windenergieanlage positiv zu beeinflussen.

Der Windpark, der nach diesem Verfahren betrieben wird, weist somit mehrere Windenergieanlagen auf, die jeweils eine Gondel und einen Generator aufweisen. Jede Windenergieanlage ist in ihrer Azimutstellung, also in ihrer Ausrichtung zum Wind veränderbar. Außerdem stehen wenigstens zwei der Windenergieanlagen so nahe zusammen, dass sie sich je nach Windrichtung über den Wind beeinflussen können. Eine Beeinflussung liegt also besonders dann vor, wenn eine erste der Windenergieanlagen aus Windrichtung gesehen vor der anderen steht. Die erste Windenergieanlage steht somit in Luv und die andere in Lee. Die Beeinflussung kann von diversen Faktoren abhängen. Jedenfalls ist dann eine Beeinflussung zumindest der ersten auf die dahinter liegende anzunehmen, wenn der Abstand dieser beiden Windenergieanlagen kleiner ist als die zehnfache, insbesondere kleiner als die fünffache Turmhöhe der ersten Windenergieanlage.

Es wird nun vorgeschlagen, dass diese wenigstens eine erste Windenergieanlage in Abhängigkeit ihrer Azimutstellung abgeregelt wird, um den Wind für die hintere Windenergieanlage positiv zu beeinflussen. Hierunter ist besonders auch zu verstehen, dass der Wind nicht oder nicht weniger negativ beeinflusst wird, als dies ohne Abregeln der Fall wäre. Das Abregeln verbessert also die Windsituation für die nachfolgende Anlage im Vergleich zu der Situation, wenn die erste Anlage nicht abregeln würde, ohne dass sie abgeschaltet zu werden braucht.

Es wird somit vorgeschlagen, dass die erste Windenergieanlage weiter betrieben wird, allerdings in ihrem Betrieb eine Reduktion erfährt. Die Windenergieanlage wird also nicht angehalten bzw. abgeschaltet.

Insbesondere erfolgt das Abregeln so, dass eine Betriebsveränderung vorgenommen wird. Hierunter fallen die Möglichkeiten, die Generatorleistung zu reduzieren, eine maximale Generatorleistung vorzugeben, die Rotordrehzahl zu reduzieren, den Blattwinkel zu vergrößern und außerdem oder alternativ einen minimalen Blattwinkel vorzugeben.

Durch das Reduzieren der Generatorleistung wird auch die Windenergieanlage insgesamt auf diese reduzierte Leistung eingestellt und entsprechend wird auch weniger Leistung aus dem Wind genommen und der Wind somit weniger stark beeinflusst. Als Ergebnis wird der Wind durch diese erste Anlage für die dahinter stehende Anlage weniger reduziert. Außerdem oder alternativ erfährt der Wind weniger Verwirbelungen.

Das Reduzieren der Generatorleistung kann durch einen entsprechenden Vorgabewert aktuell in Abhängigkeit der vorliegenden Situation durchgeführt werden. Eine Möglichkeit besteht auch darin, eine maximale Generatorleistung vorzugeben. Dadurch wird der Generator anhand dieser maximalen Generatorleistung geführt und entsprechend kann keine niedrigere Generatorleistung eingestellt werden. Eine solche Vorgabe ist besonders dann sinnvoll, wenn auch andere Regelungseingriffe auf die Generatorleistung vorgenommen werden können, wie beispielsweise diese erste Windenergieanlage aufgrund einer vorgeschriebenen Schallreduzierung in ihrer Leistung abzuregeln. Durch diese Vorgabe eines Maximalwertes können Konflikte vermieden werden, indem bei Vorliegen unterschiedlicher Leistungsgrenzen aus unterschiedlichen Anlässen auf einfache Weise der kleinste Wert zur Regelung bzw. Abregelung verwendet wird. Ein Konflikt unterschiedlicher Leistungssollwerte kann somit vermieden werden.

Eine andere oder ergänzende Möglichkeit der Abregelung besteht darin, die Rotordrehzahl zu reduzieren. Besonders die Rotordrehzahl kann einen nicht unerheblichen Einfluss auf den Wind für eine hinter dieser ersten Anlage angeordnete Windenergieanlage haben. Auch hier kann eine maximale Rotordrehzahl vorgegeben werden. Ein Vorteil gegenüber einer unmittelbar vorgegebenen Rotordrehzahl ergibt sich wie sinngemäß zum Vorgeben einer maximalen Generatorleistung erläutert durch Vermeiden eines Konfliktes bei mehreren Drehzahlvorgaben. Außerdem, und das gilt wiederum auch für das Vorgeben einer maximalen Generatorleistung, kann hier auch in Abhängigkeit der Azimutposition, die dem Abregeln zugrunde liegt, ein fester Wert vorgegeben werden, der beispielsweise auch dann vorliegt, wenn die Anlage erst noch anlaufen muss. Dann bestehen diese Werte bereits und können auf einfache Art und Weise berücksichtigt werden.

Außerdem oder alternativ kann das Abregeln dadurch erfolgen, dass ein Blattwinkel vergrößert wird. Insbesondere wird dieser Blattwinkel für alle Rotorblätter der Windenergieanlage gleichermaßen vergrößert. Dies kann für diese erste Windenergieanlage, die hier reduziert wird, wie eine Reduzierung der Windgeschwindigkeit wirken. Das Vergrößern des Blattwinkels ist insoweit wie eine Verschlechterung des Blattanstellwinkels zu sehen, so dass weniger Leistung aus dem Wind genommen wird und entsprechend auch der Wind für die nachfolgende Windenergieanlage weniger beeinflusst, insbesondere weniger verringert wird und/oder weniger Verwirbelung erfährt.

Auch für die Verwendung des Blattwinkels als Möglichkeit zum Abregeln wird vorgeschlagen, einen minimalen Blattwinkel vorzugeben. Dabei wird unter einer Vergrößerung des Blattwinkels ein Verstellen des Blattes in Richtung zu einer Fahnenstellung hin verstanden. Bei einem fest eingestellten Wert im Teillastbetrieb liegt hingegen ein sehr kleiner Winkel zwischen 1 bis 10° vor. Insbesondere kann ein solcher kleiner, nämlich optimaler Winkel 5° betragen.

Durch das Vorgebe eines minimalen Blattwinkels kann auch hier einem etwaigen Konflikt begegnet werden, sollte auch aus einem anderen Anlass eine Blattwinkelvergrößerung gewünscht sein. Auch hier können dann unterschiedliche minimale Blattwinkel vorgegeben werden und diese unterschiedlichen Vorgaben können dadurch berücksichtigt werden, dass von diesen minimalen Blattwinkeln der größte als Untergrenze ausgewählt wird.

Eine Kombination der genannten Möglichkeiten der Abregelung ist auch möglich. Besonders kann auch eine Leistungsreduzierung und/oder Drehzahlreduzierung durch Verstellen des Blattwinkels erreicht werden, um nur ein Beispiel zu nennen.

Gemäß einer Ausführungsform wird vorgeschlagen, dass für das Abregeln in Abhängigkeit der Azimutstellung ein Azimutsektor vorgegeben wird, so dass die Abregelung vorgenommen wird, wenn die Windenergieanlage eine Azimutposition innerhalb des vorgegebenen Azimutsektors aufweist. Die Überprüfung der Azimutstellung, die Voraussetzung für die Abregelung ist, kann somit auf einfache Art und Weise durch Vorgabe eines solchen Azimutsektors umgesetzt werden. Durch die Vorgabe eines solchen Azimutsektors können auch die konkreten Gegebenheiten berücksichtigt werden, insbesondere kann abhängig des Abstandes zwischen der ersten Windenergieanlage und der hinteren Windenergieanlage der Azimutsektor unterschiedlich groß sein. Entsprechend kann ein Azimutsektor entsprechender Größe ausgewählt werden.

Erfindungsgemäß ist vorgesehen, dass das Abregeln erst nach einer vorbestimmten Verzögerungszeit aufgehoben wird, nachdem ein Kriterium zum Abregeln nicht mehr vorliegt. Dies ist besonders auch für das Abregeln in Abhängigkeit eines Azimutsektors vorteilhaft. Verlässt die Windenergieanlage, also die Gondel in ihrer Stellung den Azimutsektor, wird nicht sofort das Abregeln aufgehoben, sondern erst die vorbestimmte Verzögerungszeit abgewartet. Bewegt sich in dieser Zeit die Gondel wieder zurück in den Azimutsektor, kann die Windenergieanlage in dem abgeregelten Betrieb weiter betrieben werden. Besonders ein ständiges Abregeln und Aufheben des Abregelns, wenn sich die Gondel in einem Bereich einer Grenze eines Azimutsektors befindet, kann dadurch vermieden werden.

Gemäß einer Ausführungsform wird grundsätzlich vorgeschlagen, dass das Abregeln zusätzlich abhängig der Azimutstellung auch abhängig der Windgeschwindigkeit erfolgt. Sowohl bei sehr niedrigen Windgeschwindigkeiten als auch bei sehr hohen Windgeschwindigkeiten kann auf ein Abregeln verzichtet werden bzw. dieses weniger stark ausfallen. Bei sehr geringen Windgeschwindigkeiten kann der Einfluss der ersten, also in Luv stehenden Windenergieanlage auf die hinter ihr stehende Anlage gering sein, so dass ein Abregeln nicht oder weniger stark notwendig sein kann. Bei besonders hohen Windgeschwindigkeiten, besonders oberhalb einer Nennwindgeschwindigkeit kann zwar eine erhebliche Schwächung des Windes für die nachfolgende Windenergieanlage auftreten, die aber dennoch zu einem hinteren Wind führt, der oberhalb der Nennwindgeschwindigkeit liegt und insoweit die hintere Windenergieanlage in Lee noch immer Nennwind erhält und entsprechend mit Nennleistung betrieben werden kann.

Auch für dieses Kriterium wird vorgeschlagen, das Abregeln erst nach einer vorbestimmten Verzögerungszeit aufzuheben, wenn dieses Kriterium wegfällt. Steigt die Windgeschwindigkeit also auf einen so hohen Wert, dass eine Abregelung nicht mehr vorgenommen werden bräuchte, wird dennoch erst gemäß dieser Ausführungsform die vorbestimmte Verzögerungszeit abgewartet, bis das Abregeln tatsächlich aufgehoben wird. Ein ähnliches Vorgehen wird auch vorgeschlagen, wenn die Windgeschwindigkeit einen so großen Wert annimmt, dass aus dem Grund nicht mehr abgeregelt zu werden braucht. Auch dann wird gemäß einer Ausführungsform vorgeschlagen, zunächst eine vorbestimmte Verzögerungszeit abzuwarten und erst dann abzuregeln, wenn zwischenzeitlich die Windgeschwindigkeit nicht wieder zu weit abgesunken ist.

Dies sind mehrere Beispiele für das Abwarten einer vorbestimmten Verzögerungszeit, nachdem ein Kriterium zum Abregeln nicht mehr vorliegt. Es können aber grundsätzlich auch noch weitere Kriterien zum Abregeln berücksichtigt werden und auch für diese kann es vorteilhaft sein, erst eine vorbestimmte Verzögerungszeit abzuwarten, bis ein Abregeln wieder aufgehoben wird.

Gemäß einer weiteren Ausgestaltung wird vorgeschlagen, dass das Abregeln in Abhängigkeit wenigstens eines weiteren Kriteriums durchgeführt wird, nämlich abhängig von der Windgeschwindigkeit, wie oben schon erläutert wurde, und/oder alternativ abhängig von anderen Windbedingungen wie beispielsweise Böigkeit.

Beispielsweise kann bei einer hohen Böigkeit, insbesondere beim Auftreten vergleichsweise vieler Böen wie beispielsweise fünf Böen pro Minute, eine Abregelung nicht vorgenommen werden. Damit würde berücksichtigt werden, dass bei stark böigem Wind weniger laminare Strömungen auftreten und damit die erste Windenergieanlage, die in Luv steht, weniger stark den Wind für die nachfolgende Anlage in Lee beeinflusst bzw. ändert.

Es wird somit vorgeschlagen, die Böigkeit und außerdem oder alternativ eine Böenhäufigkeit des vorherrschenden Windes mit in das Verfahren einzubeziehen. Eine mögliche Definition einer Böe wäre, wenn der gemessene 1-Minuten-Mittelwert der Windgeschwindigkeit innerhalb weniger Sekunden, bspw. maximal 20 Sekunden und mindestens 3 Sekunden anhaltend, um mindestens 3 m/s überschritten wird. Eine Böe kann auch über einen Vergleich der aktuellen Windgeschwindigkeit mit einem 10-Minuten-Mittel vorgenommen werden, wobei ein geringeres Überschreiten, z.B. im Bereich von 1,7m/s als Böe angesehen werden kann. Entsprechend kann eine Böe festgestellt werden und damit ist es auch möglich, Böen zu zählen und somit ihre Häufigkeit, also Vorkommen pro Zeitintervall zu bestimmen.

Gemäß einer Ausführungsform wird vorgeschlagen, den Azimutsektor abhängig einer Böigkeit und außerdem oder alternativ abhängig von einer erfassten Unstetigkeit der Windrichtung zu verändern. Vorzugsweise wird der Azimutsektor hierbei vergrößert.

In einer weiteren Ausführungsform wird vorgeschlagen, dass wenigstens die erste Windenergieanlage mehrere vorgegebene Azimutsektoren aufweist, bei denen eine Abregelung vorgenommen wird. Hiermit können unterschiedliche Windrichtungen berücksichtigt werden, die dazu führen, dass unterschiedliche Windenergieanlagen bezogen auf diese erste Windenergieanlage dahinter, also in Lee stehen. Dabei können diese Azimutsektoren unterschiedlich groß sein und auch zu unterschiedlichen Verhalten dieser ersten Windenergieanlage führen, insbesondere zu unterschiedlichen Abregelverhalten. Es können sich Azimutsektoren auch überschneiden.

Sind beispielsweise zwei Azimutsektoren vorgesehen, die zu unterschiedlichen minimalen Blattwinkeln führen, so kann darüber ein unterschiedliches Abregeln in beiden Sektoren erreicht werden. Überlappen sich diese beiden Sektoren, so kann durch die Vorgabe jeweils eines minimalen Blattwinkels ein Konflikt in diesem Überlappungsbereich vermieden werden, weil von diesem minimalen Blattwinkel der größte ausgewählt wird und damit auch der kleinere minimale Blattwinkel eingehalten wird. Dies ist insoweit nur ein spezielles Beispiel.

Erfidungsgemäß wird das Abregeln in Abhängigkeit der Azimutposition so durchgeführt, dass die in Windrichtung hinter der ersten angeordneten weiteren Windenergieanlage, also die Anlage in Lee, mehr Windleistung erhält als ohne Abregeln der ersten Windenergieanlage. Dazu wird vorgesehen, dass das Abregeln unterlassen wird, oder dass weniger abgeregelt wird, wenn die Windenergieanlage hinter der ersten Windenergieanlage, wenn also die Windenergieanlage in Lee in einem gedrosselten Betrieb arbeitet.

Dem liegt die Erkenntnis zugrunde, dass das Abregeln in bestimmten Fällen unterbleiben kann. Durch das Abregeln der Windenergieanlage in Luv erhält die Windenergieanlage in Lee mehr Wind als für den Fall, wenn nicht abgeregelt würde. Ist die Windenergieanlage in Lee aber in einem gedrosselten Betrieb, erzeugt sie ohnehin schon weniger Leistung. Es wurde erkannt, dass in diesem Fall ein Abregeln der Windenergieanlage in Luv entbehrlich sein kann.

Häufig führt der gedrosselte Betrieb auch zu verstellten Rotorblättern, die wenigstens etwas aus dem Wind gedreht sind und daher auch weniger anfällig für Verwirbelungen sind, die durch die Windenergieanlage in Luv erzeugt werden könnten.

Vorzugsweise wird ein solches Abregeln unterlassen oder es wird weniger abgeregelt, wenn die Windenergieanlage hinter der ersten Windenergieanlage, also die Windenergieanlage in Lee in einem schallreduzierten Betrieb arbeitet. Ein solcher schallreduzierter Betrieb kann vorgesehen sein, um beispielsweise Anwohner in der Nähe der Windenergieanlage nicht zu stören. Dabei kann ein solcher schallreduzierter Betrieb bei einem Windpark nur für eine oder mehrere, aber nicht unbedingt für alle Windenergieanlagen vorgesehen sein. Der schallreduzierte Betrieb hängt von vielen Randbedingungen ab, insbesondere wie nah die betreffende Windenergieanlage an einem Anwohner ist, um dieses Beispiel weiter zu verwenden. Es kann also beispielsweise in Betracht kommen, dass die eine Windenergieanlage in einem schallreduzierten Betrieb arbeitet, insbesondere dadurch in einem leistungsreduzierten Betrieb arbeitet, also weniger Leistung erzeugt, als aufgrund der Windverhältnisse möglich wäre. In diesem Fall braucht die davor stehende Windenergieanlage, also die Windenergieanlage in Luv nicht abzuregeln oder nicht so stark abzuregeln.

Gemäß einer Ausführungsform wird vorgeschlagen, dass das Abregeln mit einem Gradienten durchgeführt wird. Das betrifft insbesondere die erste Windenergieanlage, wenn sie von einem nicht abgeregelten Zustand in einen Zustand wechselt, in dem abgeregelt werden soll. Dann wird beispielsweise ein Wert für eine maximale Generatorleistung vorgegeben und/oder ein Wert für eine maximale Rotordrehzahl vorgegeben und/oder ein Wert für einen minimalen Blattwinkel vorgegeben. Die Anlage schaltet aber nicht auf diesen neuen Betriebszustand um, wobei hier angenommen wird, dass der aktuelle Betrieb oberhalb dieser maximalen Generatorleistung bzw. oberhalb der maximalen Rotordrehzahl bzw. unterhalb dieses minimalen Blattwinkels ist, sondern steuert einen solchen neuen Betriebspunkt mit wenigstens einem Gradienten an. Wenn mehrere der genannten Betriebsveränderungen durchgeführt werden, können auch unterschiedliche Gradienten vorgesehen sein.

Dies hat nicht nur zum Ziel, die Anlagensteuerung als solche zu entlasten, also beispielsweise ein abruptes Verstellen der Rotorblätter zu vermeiden. Es könnte besonders auch eine resultierende Leistungsreduzierung einen unerwünschten Effekt auf das elektrische Versorgungsnetz haben, in das eingespeist wird, was durch Verwendung eines oder mehrerer Gradienten vermieden oder reduziert wird.

Erfindungsgemäß wird zudem ein Windpark gemäß Anspruch 8 vorgeschlagen. Dabei ist ein Windpark eine Ansammlung mehrerer Windenergieanlagen, die insbesondere über einen gemeinsamen Netzanschlusspunkt in ein Versorgungsnetz einspeisen. Die vorliegende Erfindung betrifft dabei ein vorteilhaftes Betriebsverhalten der Windenergieanlagen in diesem Park. Dabei kommt es auf die gegenseitige Beeinflussung der Windenergieanlagen über den Wind an, wobei diese gegenseitige Beeinflussung bei einer Windrichtung meist nur die Beeinflussung der ersten Windenergieanlage auf die zweite, dahinter stehende betrifft, selten umgekehrt.

Die Erfindung wird nachfolgend anhand von Ausführungsbeispielen exemplarisch unter Bezugnahme auf die begleitenden Figuren näher erläutert.
- Fig. 1: zeigt eine Windenergieanlage in einer perspektivischen Ansicht.
- Fig. 2: veranschaulicht in einer schematischen Draufsicht auf zwei Windenergieanlagen ein verändertes Windfeld.
- Fig. 3: erläutert schematisch anhand eines Zeitdiagramms mögliche Leistungsverläufe zweier Windenergieanlagen, wie sie beispielsweise in Fig. 2 gezeigt sind.
- Fig.4: zeigt einen Windpark in einer schematischen Darstellung.

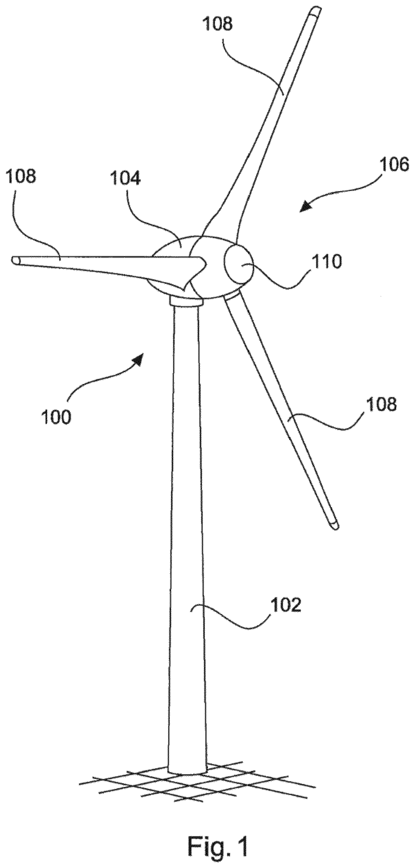

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

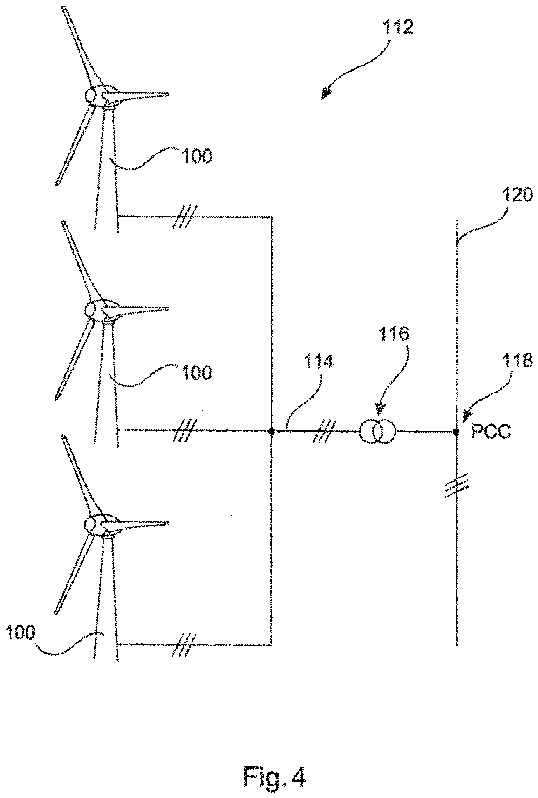

Fig. 4 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112.

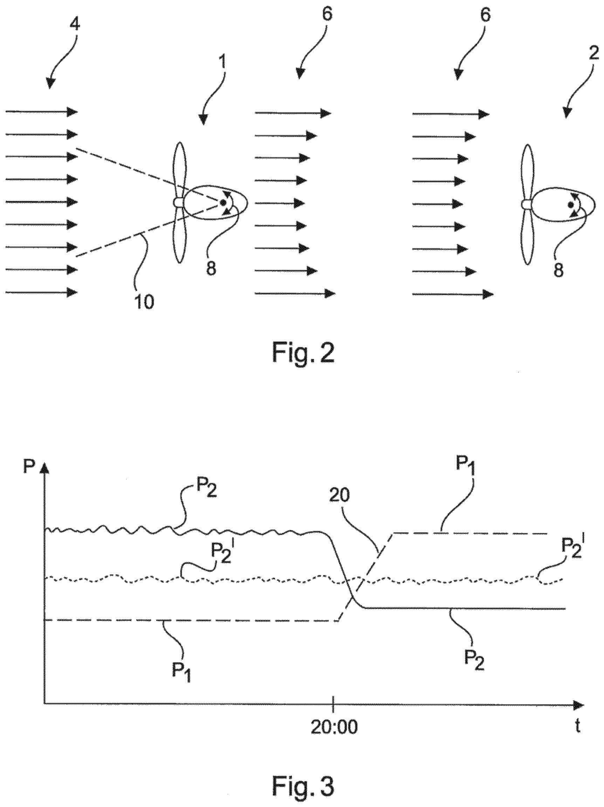

Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

In Fig. 2 ist in einer sehr schematischen Draufsicht eine Anordnung zweier Windenergieanlagen dargestellt, nämlich einer ersten Windenergieanlage 1 und einer zweiten Windenergieanlage 2, wobei die erste Windenergieanlage 1 in Bezug auf die zweite Windenergieanlage 2 in Luv angeordnet ist und entsprechend ist die zweite Windenergieanlage 2 in Bezug auf die erste Windenergieanlage in Lee angeordnet. Zur Veranschaulichung zeigt die Fig. 2 ein ideales Windfeld 4, demnach durch diverse Pfeile gleicher Länge und gleicher Richtung verdeutlicht werden soll, dass der Wind gleichstark und in die gleiche Richtung bläst. Dieses idealisierte Windfeld trifft somit auf die erste Windenergieanlage 1 bzw. es wirkt auf die erste Windenergieanlage 1.

Es wird dann davon ausgegangen, dass aus diesem idealen Windfeld 4 bedingt durch die erste Windenergieanlage 1 das nachgelagerte Windfeld 6 entsteht. Dieses nachgelagerte Windfeld 6 ist veranschaulichend aus der Windrichtung gesehen hinter der ersten Windenergieanlage 1 und nochmals unmittelbar vor der zweiten Windenergieanlage 2 gezeichnet. Insoweit wird hier vereinfachend davon ausgegangen, dass sich dieses Windfeld 6 auf diesem Wege nicht mehr verändert. Dies ist zwar idealisierend, reicht aber für die Erläuterung der Erfindung aus.

Jedenfalls wird in dem nachgelagerten Windfeld 6 durch unterschiedlich lange Pfeile angedeutet, dass der Wind nun unterschiedlich stark ist. Auf Verwirbelungseffekte wird in dieser Veranschaulichung der Fig. 2 nicht eingegangen. Entsprechend ist zu erkennen, dass das ideale Windfeld 4 durch die erste Windenergieanlage 1 im Bereich der ersten Windenergieanlage 1 geschwächt ist und entsprechend geschwächt auf die zweite Windenergieanlage 2 trifft.

Um diese Schwächung auszugleichen, von der diese zweite Windenergieanlage 2 betroffen ist, wird nun vorgeschlagen, die erste Windenergieanlage abzuregeln. Dadurch kann die Schwächung des nachgelagerten Windfeldes 6 weniger stark ausfallen und es können jedenfalls auch, was Fig. 2 nicht zeigt, Turbulenzen im nachgelagerten Windfeld 6 reduziert werden.

Die erste und die zweite Windenergieanlage 1 und 2 sind in ihrer Azimutstellung 8 veränderbar, was durch jeweils einen gebogenen Doppelpfeil veranschaulicht ist. Der Einfluss der ersten Windenergieanlage 1 auf das nachgelagerte Windfeld 6 ist grundsätzlich von der Windrichtung unabhängig. Allerdings betrifft diese Veränderung des nachgelagerten Windfeldes die zweite Windenergieanlage 2 nur für Windrichtungen, die in etwa der in Fig. 2 vorliegenden entsprechen. Geringe Abweichungen von dieser Windrichtung können auch noch zu einem Effekt auf die zweite Windenergieanlage 2 führen und Fig. 2 zeigt dafür einen Azimutsektor 10. Kommt die Windrichtung aus einer Richtung, die innerhalb dieses Azimutsektors 10 liegt bzw. liegt die Azimutposition der ersten Windenergieanlage 1 entsprechend in diesem Azimutsektor 10, so wird ein Abregeln der ersten Windenergieanlage vorgeschlagen, um die hintere Windenergieanlage 2 vorteilhaft zu beeinflussen.

Liegt aber die Windgeschwindigkeit außerhalb dieses Azimutsektors 10 bzw. befindet sich die erste Windenergieanlage 1 in ihrer Azimutstellung außerhalb dieses Azimutsektors 10, wird davon ausgegangen, dass die erste Windenergieanlage 1 die zweite Windenergieanlage 2 nicht oder nicht signifikant beeinflusst. Entsprechend wird dann vorgeschlagen, die erste Windenergieanlage nicht abzuregeln.

Ob die Windrichtung in dem Azimutsektor 10 liegt und ob die Azimutstellung der ersten Windenergieanlage 1 entsprechend in dem Azimutsektor 10 liegt, sollte in etwa übereinstimmen, wobei es leichte Abweichungen geben kann, die auch zeitlicher Natur sein können. Praktischerweise wird vorgeschlagen, als Kriterium die Azimutstellung der ersten Windenergieanlage zu verwenden, da dies einfach zu erfassen ist und auf einfache Art und Weise in der Anlagensteuerung als Information vorliegen kann. Die Messung oder Verwertung der Windrichtung kann dadurch entbehrlich werden.

Fig. 3 veranschaulicht in einem Diagramm drei mögliche Verläufe der erzeugbaren Leistung zweier Windenergieanlagen, wie sie in Fig. 2 vereinfachend dargestellt und angeordnet sind. Insoweit kann zum Zwecke der Darstellung davon ausgegangen werden, dass die erste Leistung P₁ von der ersten Windenergieanlage 1 gemäß Fig. 2 erzeugt wird und die zweite Leistung P₂ von der zweiten Windenergieanlage 2 gemäß Fig. 2 erzeugt wird.

Außerdem ist in Fig. 3 eine theoretisch von der zweiten Windenergieanlage 2 erzeugbare Leistung P'₂ eingezeichnet, die zu erwarten wäre, wenn die Windenergieanlage 1 nicht abgeregelt wird. An der Abszisse des Diagramms der Fig. 3 ist die Zeit t aufgetragen, wobei es auf Absolutwerte nicht ankommt. Beispielsweise ist die Uhrzeit 20:00 Uhr, also 08:00 Uhr abends, eingezeichnet, weil zu dem Zeitpunkt eine Drosselung der Leistung aufgrund von Vorschriften zur Schallreduzierung vorgenommen werden kann, was hier der Anschauung dient. Auf die Absolutwerte der Leistung P kommt es nicht an, so dass die Koordinate keine Werte für die Leistung P aufweist. Es ist davon auszugehen, dass die obersten dargestellten Leistungskurven beispielsweise kurz unterhalb der Nennleistung der jeweiligen Anlagen liegen. Vereinfachend können hier zwei gleiche Windenergieanlagen mit gleichen Nennleistungen zugrunde gelegt werden.

Dem Diagramm ist nun in der ersten Hälfte, also vor dem eingezeichneten Zeitpunkt 20:00 Uhr, zu erkennen, dass die zweite Windenergieanlage 2 eine vergleichsweise hohe Leistung P₂ erzeugt. Die erste Windenergieanlage 1 ist abgeregelt und erzeugt deswegen nur die kleinere Leistung P₁. Ohne Abregelung könnte die erste Windenergieanlage 1 ähnlich viel Leistung wie dort im linken Bereich durch P₂ angezeigt ist, erzeugen. Es wird aber darauf hingewiesen, dass diese Fig. 3 veranschaulichend ist und die vorgeschlagene Abregelung der ersten Windenergieanlage 1 auch wesentlich geringer ausfallen kann.

Fig. 3 zeigt nun, dass durch das Abregeln der ersten Windenergieanlage 1 auf den Leistungswert P₁ die zweite Windenergieanlage 2 mehr Leistung, nämlich Leistung gemäß P₂, erzeugen kann, als dies ohne Abregelung der ersten Windenergieanlage 1 der Fall wäre, also mehr als durch den Wert P'₂ angezeigt ist.

Etwa um 08:00 Uhr abends wird dann im gezeigten Beispiel angenommen, dass die zweite Windenergieanlage 2 beispielsweise zur Schallreduzierung in ihrer Leistungserzeugung reduziert werden soll. Entsprechend ist die Leistung P2 der zweiten Windenergieanlage 2 auf diesen niedrigen Wert abgesenkt. Es ist zu erkennen, dass diese verringerte Leistung geringer ist, als die Leistung P'₂, die diese zweite Windenergieanlage 2 erzeugen könnte, wenn die erste Windenergieanlage 1 nicht abgeregelt würde. Somit kann die zweite Windenergieanlage 2 nun, also nach 08:00 Uhr abends, ohnehin nicht den Leistungswert erzeugen, den sie ohne Abregelung der ersten Windenergieanlage 1 nun erzeugen könnte. Entsprechend wird vorgeschlagen, die erste Windenergieanlage 1 nicht abzuregeln und entsprechend kann die Leistung P1 der ersten Windenergieanlage 1 angehoben werden auf den dargestellten höheren Wert nach 8:00 Uhr abends. Es ist auch zu erkennen, dass das Verlassen der Abregelung der ersten Windenergieanlage 1 vor 08:00 Uhr abends zu dem nicht abgeregelten Leistungswert P1 nach 08:00 Uhr abends mit einer Flanke 20 verläuft, für die ein Gradient vorgegeben werden kann.

Fig. 3 veranschaulicht somit Möglichkeiten und Auswirkungen der Abregelung oder Nichtabregelung in Bezug auf Leistung. Die Veranschaulichung bei Abregelung der Leistung ist sinngemäß auch auf andere Betriebszustände, insbesondere die Drehzahl, übertragbar.

Die vorliegende Erfindung schlägt zumindest gemäß einiger Ausführungsformen vor, Windenergieanlagen nicht innerhalb bestimmter Sektoren zu stoppen. Da dies an vielen Standorten nicht zwingend erforderlich ist und die Anlagen stattdessen mit einer reduzierten Maximalleistung oder einem größeren minimalen Blattwinkel weiterbetrieben werden können, wurde statt einer sektoriellen Abschaltung eine sektorielle Abregelung vorgeschlagen. Weiterhin werden mehrere, insbesondere acht Sektoren zum Abregeln vorgeschlagen und können bereitgestellt werden.

Ergänzend kann eine sektorielle Abschaltung auch vorgenommen werden. Dies wird insbesondere vorgeschlagen, sobald ein minimaler Blattwinkel von mehr als einem vorbestimmten Wert, insbesondere mehr als 45 Grad, in der Steuerung parametriert wird. Vorzugsweise wird ein solcher minimaler Blattwinkel zum Abschalten auf 90 Grad eingestellt.

Gemäß wenigstens einer Ausführungsform wird auch das Folgende vorgeschlagen.

Die Wirkleistung einer Windenergieanlage kann abhängig von der Gondelausrichtung und der Windgeschwindigkeit abgeregelt werden, um Turbulenzen und dadurch entstehende Lasten an nachfolgenden Windenergieanlagen in einem Windpark, den so genannten Wake-Effekt, zu verringern. Die Windenergieanlage kann bspw. abgeregelt werden, indem wahlweise die maximale Wirkleistung begrenzt und/oder der minimale Blattwinkel festgelegt wird.

Für die sektorielle Abregelung können in der Steuerung der Windenergieanlage bis zu acht Sektoren definiert werden, die sich beliebig überschneiden können. Dabei müssen für jeden Sektor jeweils ein Anfangs- und ein Endwinkel festgelegt werden, wobei die Richtung Nord dem Wert 0 Grad entsprechen kann. Für jeden einzelnen Sektor können zudem eine minimale und eine maximale Windgeschwindigkeit definiert werden.

Für jeden auf diese Weise definierten Sektor können nun wahlweise die maximale Wirkleistung und/oder der minimale Blattwinkel angegeben werden. Überschneiden sich Sektoren, werden die kleinste maximale Wirkleistung und der größte minimale Blattwinkel bestimmt und übernommen.

Um Leistungssprünge zu verhindern, kann ein Gradient zur Erhöhung und Verringerung der maximalen Wirkleistung festgelegt werden. Dieser Wert gilt gemäß einer Ausführungsform für alle Sektoren. Die Änderung des Blattwinkels ist bspw. auf maximal 0,5 Grad pro Sekunde begrenzt.

Ist die Gondel innerhalb eines der definierten Sektoren ausgerichtet und liegt der Mittelwert der Windgeschwindigkeit über einem Zeitraum von einer Minute innerhalb des zugehörigen Windgeschwindigkeitsbereiches, werden, gemäß einer Ausführungsform, von der Steuerung die maximale Wirkleistung und der minimale Blattwinkel übernommen. Die Windenergieanlage wird entsprechend abgeregelt. Verlässt die Gondel den Sektor oder liegt die Windgeschwindigkeit außerhalb des vorgegebenen Bereiches, wird die Abregelung erst nach Ablauf einer Verzögerungszeit von insbesondere 60 Sekunden aufgehoben.

Auf diese Weise wird verhindert, dass die Windenergieanlage z. B. bei böigen Windverhältnissen ständig zwischen normalem und abgeregeltem Betrieb wechselt.

Wurde ein minimaler Blattwinkel von mehr als 45 Grad vorgegeben, hält die Windenergieanlage gemäß einer Ausführungsform an und startet frühestens nach Ablauf einer Verzögerungszeit von 10 Minuten erneut.

Wird die Windenergieanlage durch die beschriebene sektorielle Abregelung abgeregelt oder angehalten, wird eine entsprechende Meldung generiert. Diese Meldung wird in einem Windparkserver abgespeichert. Auf diese Weise kann jederzeit nachvollzogen werden, in welchen Zeiträumen die Windenergieanlage abgeregelt betrieben beziehungsweise angehalten wurde.

Die Einstellungen der sektoriellen Abregelung können über eine Fernüberwachung eingesehen werden.

Wird eine sektorielle Abregelung über einen Gradienten eingesetzt oder aufgehoben, kann dieser für eine Leistungsänderung bspw. 50kW/s bis 500kW/s betragen.

## Patentansprüche

1. Verfahren zum Betreiben eines Windparks (112) mit mehreren Windenergieanlagen (100), wobei
- jede Windenergieanlage (100) jeweils eine Gondel (104) mit einem aerodynamischen Rotor (106) mit einem oder mehreren Rotorblättern sowie einem Generator aufweist,
- jede dieser Windenergieanlagen in ihrer Azimutstellung (8) veränderbar ist,
- wenigstens zwei der Windenergieanlagen (100) so nah zusammenstehen, dass sie sich je nach Windrichtung über den Wind beeinflussen können, und
- wenigstens eine erste der Windenergieanlagen (100) in Abhängigkeit ihrer Azimutstellung (8) abgeregelt wird, um den Wind für eine in Windrichtung hinter der ersten angeordneten weiteren Windenergieanlage (100) positiv zu beeinflussen, und wobei
das Abregeln abhängig von der Azimutposition so durchgeführt wird, dass die in Windrichtung hinter der ersten angeordneten weiteren Windenergieanlage (100) mehr Windleistung erhält als ohne Abregeln der ersten Windenergieanlage (100), **dadurch gekennzeichnet, dass** das Abregeln unterlassen wird oder weniger abgeregelt wird, wenn die Windenergieanlage (100) hinter der ersten Windenergieanlage (100) in einem gedrosselten Betrieb arbeitet und dass das Abregeln erst nach einer vorbestimmten Verzögerungszeit aufgehoben wird, nachdem ein Kriterium zum Abregeln nicht mehr vorliegt.

2. Verfahren nach Anspruch 1, **dadurch gekennzeichnet, dass** das Abregeln der Windenergieanlage (100) so erfolgt, dass wenigstens eine Betriebsveränderung vorgenommen wird, aus der Liste umfassend
- Reduzieren der Generatorleistung,
- Vorgeben einer maximalen Generatorleistung,
- Reduzieren der Rotordrehzahl,
- Vorgeben einer maximalen Rotordrehzahl,
- Vergrößern des Blattwinkels und
- Vorgeben eines minimalen Blattwinkels.

3. Verfahren nach einem der Ansprüche 1 oder 2, **dadurch gekennzeichnet, dass**
für das Abregeln in Abhängigkeit der Azimutstellung (8) ein Azimutsektor (10) vorgegeben wird, so dass die Abregelung vorgenommen wird, wenn die Windenergieanlage eine Azimutposition innerhalb des vorgegebenen Azimutsektors (10) aufweist.

4. Verfahren nach einem der vorstehenden Ansprüche, **dadurch gekennzeichnet, dass** das Abregeln in Abhängigkeit wenigstens eines weiteren Kriteriums durchgeführt wird aus der Liste umfassend
- Windgeschwindigkeit und
- andere Windbedingungen.

5. Verfahren nach einem der vorstehenden Ansprüche, **dadurch gekennzeichnet, dass** wenigstens die erste Windenergieanlage (100) mehrere vorgegebene Azimutsektoren (10) aufweist, bei denen eine Abregelung vorgenommen wird.

6. Verfahren nach einem der vorstehenden Ansprüche, **dadurch gekennzeichnet, dass** das Abregeln unterlassen wird oder weniger abgeregelt wird, wenn die Windenergieanlage (100) hinter der ersten Windenergieanlage (100) in einem schallreduzierten Betrieb arbeitet.

7. Verfahren nach einem der vorstehenden Ansprüche, **dadurch gekennzeichnet, dass** das Abregeln und/oder Beenden des Abregelns mit einem Gradienten durchgeführt wird.

8. Windpark mit mehreren Windenergieanlagen (100), wobei der Windpark dazu eingerichtet ist, mit einem Verfahren nach einem der vorstehenden Ansprüche betrieben zu werden.

## Claims

1. A method for operating a wind farm (112) with a number of wind power installations (100), wherein
- each wind power installation (100) respectively has a nacelle (104) with an aerodynamic rotor (106) with one or more rotor blades and also a generator,
- each of these wind power installations is variable in its azimuth position (8),
- at least two of the wind power installations (100) are so close together that, depending on the direction of the wind, they can influence one another by way of the wind, and
- at least a first of the wind power installations (100) is cut back in dependence on its azimuth position (8), in order to positively influence the wind for a further wind power installation (100) arranged downwind of the first, and wherein
the cutting back depending on the azimuth position is carried out in such a way that the further wind power installation (100) arranged downwind of the first wind power installation is exposed to more wind power than without cutting back the first wind power installation (100), **characterized in that** the cutting back is not carried out, or is carried out to a lesser extent, when the wind power installation (100) downwind of the first wind power installation (100) is operating in a throttled mode, and that the cutting back is only discontinued after a predetermined delay time once a criterion for cutting back is no longer applicable.

2. The method as claimed in claim 1, **characterized in that** the cutting back of the wind power installation (100) is performed in such a way that at least one operational change is made, from the list comprising
- reducing the generator output,
- prescribing a maximum generator output,
- reducing the rotor speed,
- prescribing a maximum rotor speed,
- increasing the blade angle and
- prescribing a minimum blade angle.

3. The method as claimed in either of claims 1 and 2, **characterized in that**
for cutting back in dependence on the azimuth position (8), an azimuth sector (10) is prescribed, so that the cutting back is performed when the wind power installation has an azimuth position within the prescribed azimuth sector (10).

4. The method as claimed in one of the preceding claims, **characterized in that** the cutting back is carried out in dependence on at least one further criterion, from the list comprising
- wind speed and
- other wind conditions.

5. The method as claimed in one of the preceding claims, **characterized in that** at least the first wind power installation (100) has a number of prescribed azimuth sectors (10) at which cutting back is performed.

6. The method as claimed in one of the preceding claims, **characterized in that** the cutting back is not carried out, or is carried out to a lesser extent, when the wind power installation (100) downwind of the first wind power installation (100) is operating in a reduced-noise mode.

7. The method as claimed in one of the preceding claims, **characterized in that** the cutting back and/or the ending of the cutting back is carried out with a gradient.

8. A wind farm with a number of wind power installations (100), wherein the wind park is being prepared to operate with a method as claimed in one of the preceding claims.

## Revendications

1. Procédé de fonctionnement d'un parc éolien (112) avec plusieurs éoliennes (100), dans lequel
- chaque éolienne (100) présente respectivement une nacelle (104) avec un rotor (106) aérodynamique avec une ou plusieurs pales de rotor ainsi qu'un générateur,
- chacune des éoliennes peut être modifiée dans sa position azimutale (8),
- au moins deux des éoliennes (100) se trouvent si proches qu'elles peuvent s'influencer selon le sens du vent par le biais du vent, et
- au moins une première des éoliennes (100) est régulée en fonction de sa position azimutale (8) afin d'influencer de manière positive le vent pour une autre éolienne (100) agencée dans le sens du vent derrière la première, et dans lequel
la régulation est réalisée en fonction de la position azimutale de sorte que l'autre éolienne (100) agencée dans le sens du vent derrière la première reçoit plus de puissance du vent que sans régulation de la première éolienne (100), **caractérisé en ce que** la régulation est cessée ou est moins régulée lorsque l'éolienne (100) travaille derrière la première éolienne (100) dans un fonctionnement étranglé et que la régulation n'est supprimée qu'après un temps de retard prédéterminé après qu'un critère de régulation n'est plus rempli.

2. Procédé selon la revendication 1, **caractérisé en ce que** la régulation de l'éolienne (100) est effectuée de sorte qu'au moins une modification de fonctionnement soit entreprise, à partir de la liste comprenant
- la réduction de la puissance de générateur,
- la prédéfinition d'une puissance de générateur maximale,
- la réduction de la vitesse de rotation de rotor,
- la prédéfinition d'une vitesse de rotation de rotor maximale,
- l'agrandissement de l'angle de pale et
- la prédéfinition d'un angle de pale minimal.

3. Procédé selon l'une des revendications 1 ou 2, **caractérisé en ce que**
pour la régulation en fonction de la position azimutale (8) un secteur azimutal (10) est prédéfini de sorte que la régulation soit entreprise, lorsque l'éolienne présente une position azimutale à l'intérieur du secteur azimutal (10) préfini.

4. Procédé selon l'une des revendications précédentes, **caractérisé en ce que** la régulation est réalisée en fonction d'au moins un autre critère à partir de la liste comprenant
- la vitesse du vent et
- d'autres conditions du vent.

5. Procédé selon l'une des revendications précédentes, **caractérisé en ce que**
au moins la première éolienne (100) présente plusieurs secteurs azimutaux (10) prédéfinis, pour lesquels une régulation est entreprise.

6. Procédé selon l'une des revendications précédentes, **caractérisé en ce que**
la régulation est cessée ou moins régulée lorsque l'éolienne (100) travaille derrière la première éolienne (100) dans un fonctionnement à réduction de bruit.

7. Procédé selon l'une des revendications précédentes, **caractérisé en ce que** la régulation et/ou la fin de la régulation est réalisée avec un gradient.

8. Parc éolien avec plusieurs éoliennes (100), dans lequel le parc éolien est aménagé afin d'être exploité avec un procédé selon l'une des revendications précédentes.
